# EUROPÄISCHE PATENTSCHRIFT

(11) **EP 3 507 129 B1**
(45) Veröffentlichungstag und Bekanntmachung des Hinweises auf die Patenterteilung: **14.06.2023**
(21) Anmeldenummer: 17754097.8
(22) Anmeldetag: 31.07.2017
(51) Int. Cl.: B60L 50/51, B60L 58/31, B60L 58/40, B60L 50/75

(54) **ANTRIEBSSYSTEM, INSBESONDERE FÜR EIN FAHRZEUG, UND VERFAHREN ZUM AUFHEIZEN EINES ANTRIEBSSYSTEMS**
DRIVE SYSTEM, IN PARTICULAR FOR A VEHICLE, AND METHOD FOR HEATING A DRIVE SYSTEM
SYSTÈME D'ENTRAÎNEMENT, EN PARTICULIER POUR UN VÉHICULE ET PROCÉDÉ DE MISE EN CHAUFFE D'UN SYSTÈME D'ENTRAÎNEMENT

(30) Priorität: 30.08.2016 DE 102016216324
(43) Veröffentlichungstag der Anmeldung: 10.07.2019
(73) Patentinhaber: Robert Bosch GmbH, 70442 Stuttgart (DE)
(72) Erfinder: BEULICH, Klaus, 71263 Weil Der Stadt (DE)
(86) Internationale Anmeldenummer: PCT/EP2017/069279
(87) Internationale Veröffentlichungsnummer: WO 2018/041499

(56) Entgegenhaltungen:
- DE-A1-102012 218 584
- DE-A1-102014 203 553
- DE-A1-102014 220 834
- JP-A- 2010 102 992
- JP-A- 2010 119 174
- US-A1- 2004 100 149
- US-A1- 2014 247 634

## Beschreibung

Die Erfindung betrifft ein Antriebssystem, insbesondere für ein Fahrzeug, umfassend eine Brennstoffzelleneinheit zur Erzeugung elektrischer Energie, eine Sekundärbatterie zur Speicherung elektrischer Energie, eine elektrische Maschine mit Wicklungen sowie einen Wechselrichter zum Ansteuern der elektrischen Maschine. Die Erfindung betrifft ferner ein Verfahren zum Aufheizen eines erfindungsgemäßen Antriebssystems.

### Stand der Technik

Es zeichnet sich ab, dass in Zukunft insbesondere in Fahrzeugen, wie Hybrid-oder Elektrofahrzeugen, vermehrt elektronische Systeme zum Einsatz kommen, die neue Energiespeichertechnologien mit elektrischer Antriebstechnik kombinieren. Zur Einspeisung von Drehstrom in eine elektrische Maschine kann über einen Wechselrichter, welcher auch als inverter bezeichnet wird, eine Gleichspannung aus einer Batterie in eine dreiphasige Wechselspannung umgerichtet werden.

Eine Möglichkeit zur Erzeugung elektrischer Energie für ein elektrisches Antriebssystem eines Fahrzeugs bilden Brennstoffzellen. Dabei werden Brennstoffzellenfahrzeuge häufig zusätzlich mit Sekundärbatterien zur Speicherung der elektrischen Energie ausgestattet, um beispielsweise eine temporäre Leistungserhöhung für den Antrieb zu schaffen oder eine Rekuperation von Bremsenergie zu ermöglichen.

Aus der DE 10 2012 222 343 A1 ist ein gattungsgemäßes Antriebssystem für ein Fahrzeug bekannt. Das Antriebssystem umfasst eine Brennstoffzelleneinheit zur Erzeugung elektrischer Energie, eine Sekundärbatterie zur Speicherung elektrischer Energie, eine elektrische Maschine sowie einen Wechselrichter zum Ansteuern der elektrischen Maschine.

Brennstoffzellen, insbesondere im automobilen Einsatz, können sich bei Inbetriebnahme in einer Umgebung befinden, deren Temperatur niedrig ist, insbesondere deutlich unter dem Gefrierpunkt liegt. Um eine Beschädigung der Brennstoffzellen, zu vermeiden, ist es bekannt, dem normalen Betrieb der Brennstoffzellen eine Aufheizphase voranzustellen. In dieser Aufheizphase wird üblicherweise der Wirkungsgrad der Brennstoffzellenanordnung verschlechtert, um die Abwärmeproduktion der Brennstoffzellen zu erhöhen.

Aus der DE 10 2012 218 584 A1 geht eine Brennstoffzellenanordnung sowie ein Verfahren zum Aufheizen der Brennstoffzellenanordnung hervor. Dabei ist zwischen den Kontakten der Brennstoffzellenanordnung ein zuschaltbarer elektrischer Widerstand vorgesehen. Wird dieser Widerstand zugeschaltet, so wird Wärme zum Aufheizen der Brennstoffzellenanordnung erzeugt.

Aus der DE 10 2007 026 003 A1 ist ein Brennstoffzellensystem sowie ein Verfahren zum Kaltstarten des Brennstoffzellensystems bekannt. Bei einem Kaltstart des Brennstoffzellensystems werden dabei elektrische Lasten zugeschaltet und gleichzeitig findet eine Angleichung der Reaktandenzufuhr statt.

Ein Verfahren zum Starten einer Feststoffpolymerelektrolytbrennstoffzelle unterhalb der normalen Betriebstemperatur ist aus der DE 600 05 836 T2 bekannt. Dabei wird die Zufuhr eines Reaktanden während des Startzeitraums verknappt.

In der DE 10 2008 029 155 A1 ist eine Brennstoffzellenanordnung mit Strömungskanälen offenbart, welche zusätzliche Mittel zum Beheizen aufweist. Diese Mittel zum Beheizen sind beispielsweise eine Infrarot-Heizvorrichtung oder ein Heizelement

Wechselrichter zum Erzeugen einer dreiphasigen Wechselspannung aus einer Gleichspannung sind dem Fachmann bekannt. Beispielsweise gehen aus "2014 IEEE, Print ISBN: 978-3-8007-3603-4" sowie aus "SIMULATION AND IMPLEMENTATION OF TWO-LEVEL AND THREE-LEVEL INVERTERS BY MATLAB AND RT-LAB, Ohio State University 2011" 3-Level-Inverter hervor, welche mehrere elektronische Schalter und Dioden sowie einen Pluspol, einen Minuspol und einen Neutralpol aufweisen.

JP 2010 119 174 bezieht sich auf ein Antriebssystem mit einer Brennstoffzelleneinheit, wobei die Brennstoffzelleneinheit und die Sekundärbatterie seriell verschaltet und mit den Polen des Wechselrichters verbunden werden können.

DE 10 2014 220 834 A1 bezieht sich auf ein elektrisches Antriebssystem und ein Verfahren zum Betreiben einer elektrischen Maschine. Durch Temporäre Leistungssteigerung kann die elektrische Maschine in einem Betriebsmodus angesteuert werden, bei der die zur Ansteuerung verwendete Spannung durch eine weitere Energiequelle erhöht wird.

US2004 0100149 A1 bezieht sich auf eine elektrische Energieversorgung mit DC/DC-Wandlern oder AC/DC-Wandlern. Auch hier wird ein 3-Phasen-Inverter eingerichtet, der zwischen zwei Spulen und einem Energiemodul angeordnet ist.

US2014/0247634 A1 bezieht sich auf ein dreistufiges Umrichtersystem mit einer Anzahl von Ein-Phasen-Schaltkreisen, welche Energie von in Serie geschalteten Einheiten erhalten.

DE 10 2014 203 553 A1 bezieht sich auf ein elektrisches Antriebssystem mit einer n-phasigen elektrischen Maschine, wobei n > 1 ist. Diese umfasst mindestens zwei mehrphasige Wicklungsstränge sowie einen ersten Wechselrichter, dessen Ausgangsanschlüsse mit den Phasenanschlüssen eines ersten der mehrphasigen Wicklungsstränge der elektrischen Maschine verbunden sind.

JP2010102992A1 bezieht sich auf eine Steuerungseinrichtung eines Mehrphasenantriebs.

### Offenbarung der Erfindung

Erfindungsgemäß wird ein Verfahren zum Aufheizen eines elektrischen Antriebssystems vorgeschlagen. Erfindungsgemäß werden dabei die Schalter des Wechselrichters derart angesteuert, dass ein kurzschlussartiger Strompfad zwischen den Polen des Wechselrichters entsteht, mit denen die Brennstoffzelleneinheit verbunden ist. Es wird also ein kurzschlussartiger Strompfad zwischen dem positiven Terminal und dem negativen Terminal der Brennstoffzelleneinheit erzeugt. Dadurch fließt ein verhältnismäßig hoher Strom durch die Brennstoffzelleneinheit und durch den Wechselrichter. Dadurch wird Wärme erzeugt, und das Antriebssystem, insbesondere die Brennstoffzelleneinheit, wird aufgeheizt.

Das Antriebssystem umfasst eine Brennstoffzelleneinheit zur Erzeugung elektrischer Energie, eine Sekundärbatterie zur Speicherung elektrischer Energie, eine elektrische Maschine mit Wicklungen sowie einen Wechselrichter zum Ansteuern der elektrischen Maschine. Der Wechselrichter weist insbesondere drei Phasenausgänge auf, und die elektrische Maschine weist drei Wicklungen auf. Die Phasenausgänge sind mit den Wicklungen der elektrischen Maschine verbunden.

Der Wechselrichter ist als 3-Level-Inverter ausgebildet und weist mehrere elektronische Schalter und Dioden sowie einen Pluspol, einen Minuspol und einen Neutralpol auf. Dabei sind die Brennstoffzelleneinheit und die Sekundärbatterie seriell verschaltet und mit den Polen des Wechselrichters verbunden. Beispielsweise ist die Brennstoffzelleneinheit mit dem Minuspol und dem Neutralpol verbunden, und die Sekundärbatterie ist mit dem Neutralpol und dem Pluspol verbunden. Alternativ ist die Sekundärbatterie mit dem Minuspol und dem Neutralpol verbunden, und die Brennstoffzelleneinheit ist mit dem Neutralpol und dem Pluspol verbunden.

Vorteilhaft sind die Brennstoffzelleneinheit und die Sekundärbatterie derart mit den Polen des Wechselrichters verbunden, dass an dem Pluspol ein höheres Potential anliegt als an dem Neutralpol, und dass an dem Minuspol ein tieferes Potential anliegt als an dem Neutralpol. Beispielsweise ist ein negatives Terminal der Brennstoffzelleneinheit oder der Sekundärbatterie mit dem Minuspol verbunden, und ein positives Terminal der Brennstoffzelleneinheit oder der Sekundärbatterie ist dem Neutralpol verbunden. Ebenso ist das negative Terminal der Brennstoffzelleneinheit oder der Sekundärbatterie mit dem Neutralpol verbunden, und das positive Terminal der Brennstoffzelleneinheit oder der Sekundärbatterie ist dem Pluspol verbunden.

Vorzugsweise ist parallel zu den Schaltern des Wechselrichters jeweils eine Freilaufdiode geschaltet. Zwischen den Schaltern des Wechselrichters und dem Neutralpol des Wechselrichters sind vorzugsweise Klemmdioden vorgesehen.

Gemäß der Erfindung werden die Schalter des Wechselrichters derart angesteuert, dass in dem kurzschlussartigen Strompfad mindestens eine Wicklung der elektrischen Maschine liegt. Durch die Impedanz der Wicklung der elektrischen Maschine wird die Stromstärke begrenzt.

Gemäß der Erfindung werden die Schalter des Wechselrichters dabei derart angesteuert, dass der kurzschlussartige Strompfad periodisch entsteht und aufgehoben wird. Mittels Pulsweitenmodulation (PWM) lässt sich einerseits die durchschnittliche Stromstärke steuern. Zusätzlich entsteht beim Aufheben des kurzschlussartigen Strompfads in der Wicklung der elektrischen Maschine eine Induktionsspannung.

Besonders bevorzugt ist parallel zu jedem Schalter jeweils eine Freilaufdiode derart geschaltet, dass die Induktionsspannung, die durch Aufheben des kurzschlussartigen Strompfads in der Wicklung der elektrischen Maschine entsteht, einen Strom erzeugt, der über mindestens eine Freilaufdiode zu der Sekundärbatterie fließt. Durch besagten Strom wird die Sekundärbatterie aufgeladen.

Das erfindungsgemäße Verfahren findet vorteilhaft Verwendung in einem Brennstoffzellenfahrzeug (Fuel Cell Vehicle, FCV).

### Vorteile der Erfindung

Das erfindungsgemäße Verfahren gestattet eine verhältnismäßig präzise Steuerung der Aufheizphase des Antriebssystems, insbesondere der Brennstoffzelleneinheit. Dabei lässt sich die durchschnittliche Stromstärke mittels Pulsweitenmodulation gezielt einstellen. Auch sind zusätzliche Schaltelemente, beispielsweise ein Lastwiderstand, nicht erforderlich. Alle zum Aufheizen des Antriebssystems erforderlichen Schaltelemente sind in dem Antriebssystem selbst vorhanden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Antriebssystems und
- Figur 2: eine Ersatzschaltung des Antriebssystems aus Figur 1 zum Aufladen der Sekundärbatterie.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

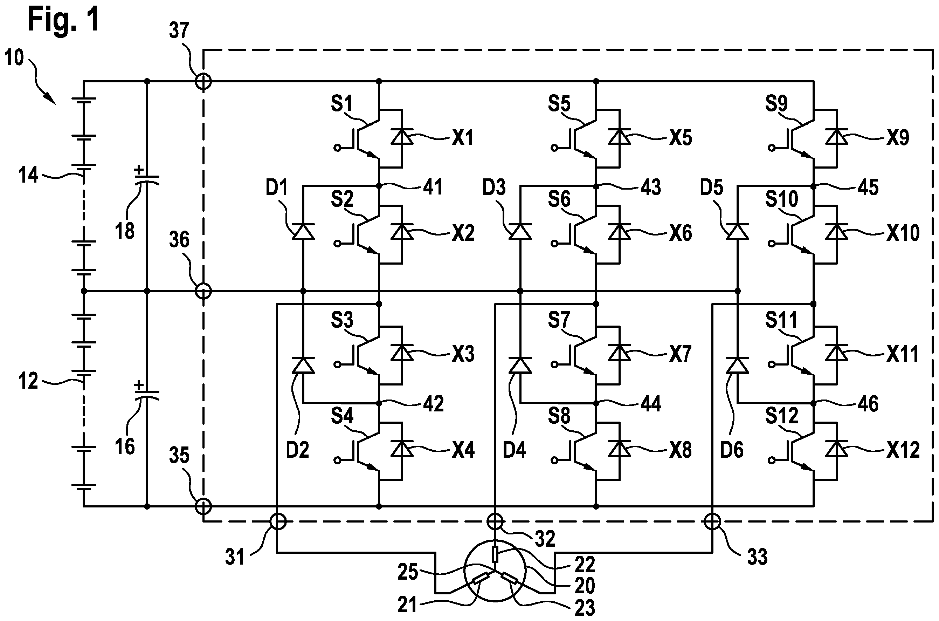

In Figur 1 ist ein Antriebssystem 10 schematisch dargestellt. Das Antriebssystem 10 umfasst eine Brennstoffzelleneinheit 12 zur Erzeugung elektrischer Energie und eine Sekundärbatterie 14 zur Speicherung elektrischer Energie. Die Brennstoffzelleneinheit 12 sowie die Sekundärbatterie 14 weisen jeweils mehrere seriell verschaltete Zellen auf. Parallel zu der Brennstoffzelleneinheit 12 ist ein erster Kondensator 16 geschaltet. Parallel zu der Sekundärbatterie 14 ist ein zweiter Kondensator 18 geschaltet.

Ferner umfasst das Antriebssystem 10 eine elektrische Maschine 20 mit einer ersten Wicklung 21, einer zweiten Wicklung 22 und einer dritten Wicklung 23. Die Wicklungen 21, 22, 23 sind vorliegend in einer Sternschaltung verschaltet und mit einem Sternpunkt 25 verbunden. Die Wicklungen 21, 22, 23 könnten auch in einer Dreieckschaltung verschaltet sein.

Das Antriebssystem 10 umfasst auch einen Wechselrichter 30 zum Ansteuern der elektrischen Maschine 20. Der Wechselrichter 30 weist vorliegend einen ersten Phasenausgang 31, der mit der ersten Wicklung 21 verbunden ist, einen zweiten Phasenausgang 32, der mit der zweiten Wicklung 22 verbunden ist, und einen dritten Phasenausgang 33, der mit der dritten Wicklung 23 verbunden ist, auf.

Der Wechselrichter 30 weist ferner einen Minuspol 35, einen Neutralpol 36 und einen Pluspol 37 auf. Vorliegend ist ein negatives Terminal der Brennstoffzelleneinheit 12 mit dem Minuspol 35 verbunden, und ein positives Terminal der Brennstoffzelleneinheit 12 ist mit dem Neutralpol 36 verbunden. Ferner ist ein negatives Terminal der Sekundärbatterie 14 mit dem Neutralpol 36 verbunden, und ein positives Terminal der Sekundärbatterie 14 ist mit dem Pluspol 37 verbunden. Die Brennstoffzelleneinheit 12 und die Sekundärbatterie 14 sind somit auch seriell verschaltet.

Eine erste Klemmdiode D1 ist zwischen dem Neutralpol 36 und einen ersten Knotenpunkt 41 vorgesehen. Eine zweite Klemmdiode D2 ist zwischen dem Neutralpol 36 und einen zweiten Knotenpunkt 42 vorgesehen. Eine dritte Klemmdiode D3 ist zwischen dem Neutralpol 36 und einen dritten Knotenpunkt 43 vorgesehen. Eine vierte Klemmdiode D4 ist zwischen dem Neutralpol 36 und einen vierten Knotenpunkt 44 vorgesehen. Eine fünfte Klemmdiode D5 ist zwischen dem Neutralpol 36 und einen fünften Knotenpunkt 45 vorgesehen. Eine sechste Klemmdiode D6 ist zwischen dem Neutralpol 36 und einen sechsten Knotenpunkt 46 vorgesehen.

Zwischen dem Pluspol 37 und dem ersten Knotenpunkt 41 ist ein erster Schalter S1 angeordnet. Zwischen dem ersten Phasenausgang 31 und dem ersten Knotenpunkt 41 ist ein zweiter Schalter S2 angeordnet. Zwischen dem ersten Phasenausgang 31 und dem zweiten Knotenpunkt 42 ist ein dritter Schalter S3 angeordnet. Zwischen dem Minuspol 35 und dem zweiten Knotenpunkt 42 ist ein vierter Schalter S4 angeordnet.

Zwischen dem Pluspol 37 und dem dritten Knotenpunkt 43 ist ein fünfter Schalter S5 angeordnet. Zwischen dem zweiten Phasenausgang 32 und dem dritten Knotenpunkt 43 ist ein sechster Schalter S6 angeordnet. Zwischen dem zweiten Phasenausgang 32 und dem vierten Knotenpunkt 44 ist ein siebter Schalter S7 angeordnet. Zwischen dem Minuspol 35 und dem vierten Knotenpunkt 44 ist ein achter Schalter S8 angeordnet.

Zwischen dem Pluspol 37 und dem fünften Knotenpunkt 45 ist ein neunter Schalter S9 angeordnet. Zwischen dem dritten Phasenausgang 33 und dem fünften Knotenpunkt 45 ist ein zehnter Schalter S10 angeordnet. Zwischen dem dritten Phasenausgang 33 und dem sechsten Knotenpunkt 46 ist ein elfter Schalter S11 angeordnet. Zwischen dem Minuspol 35 und dem sechsten Knotenpunkt 46 ist ein zwölfter Schalter S12 angeordnet.

Bei den Schaltern S1, S2, S3, S4, S5, S6, S7, S8, S9, S10, S12 des Wechselrichters handelt es sich um elektronische Schalter, die von einer nicht dargestellten Ansteuereinheit ansteuerbar sind. Die besagten Schalter S1, S2, S3, S4, S5, S6, S7, S8, S9, S10, S12 sind vorzugsweise als Bipolartransistor oder als Bipolartransistor mit isolierter Gate-Elektrode (insulated gate bipolar transistor, IGBT) ausgeführt.

Parallel zu dem ersten Schalter S1 ist eine erste Freilaufdiode X1 geschaltet. Parallel zu dem zweiten Schalter S2 ist eine zweite Freilaufdiode X2 geschaltet. Parallel zu dem dritten Schalter S3 ist eine dritte Freilaufdiode X3 geschaltet. Parallel zu dem vierten Schalter S4 ist eine vierte Freilaufdiode X4 geschaltet. Parallel zu dem fünften Schalter S5 ist eine fünfte Freilaufdiode X5 geschaltet. Parallel zu dem sechsten Schalter S6 ist eine sechste Freilaufdiode X6 geschaltet. Parallel zu dem siebten Schalter S7 ist eine siebte Freilaufdiode X7 geschaltet. Parallel zu dem achten Schalter S8 ist eine achte Freilaufdiode X8 geschaltet. Parallel zu dem neunten Schalter S9 ist eine neunte Freilaufdiode X9 geschaltet. Parallel zu dem zehnten Schalter S10 ist eine zehnte Freilaufdiode X10 geschaltet. Parallel zu dem elften Schalter S11 ist eine elfte Freilaufdiode X11 geschaltet. Parallel zu dem zwölften Schalter S12 ist eine zwölfte Freilaufdiode X12 geschaltet.

Zum Aufheizen des Antriebssystems 10 können beispielsweise der zweite Schalter S2, der dritte Schalter S3 und der vierte Schalter S4 geschlossen werden. Dadurch entsteht kurzschlussartiger Strompfad von dem Neutralpol 36 über die erste Klemmdiode D1, den zweiten Schalter S2, den dritten Schalter S3 und den vierten Schalter S4 zu dem Minuspol 35. Die Brennstoffzelleneinheit 12 liefert dabei einen Strom durch den entstandenen kurzschlussartigen Strompfad.

Der zweite Schalter S2, der dritte Schalter S3 und der vierte Schalter S4 können dabei periodisch geschlossen und geöffnet werden, beispielsweise mit einer Frequenz von 10 kHz, wodurch der kurzschlussartige Strompfad periodisch entsteht und aufgehoben wird. Mittels Pulsweitenmodulation (PWM) lässt sich dabei die durchschnittliche Stromstärke des Stroms aus der Brennstoffzelleneinheit 12 steuern.

Ein ähnlicher kurzschlussartiger Strompfad entsteht, wenn beispielsweise der sechste Schalter S6, der siebte Schalter S7 und der achte Schalter S8 geschlossen werden. Ein ähnlicher kurzschlussartiger Strompfad entsteht auch, wenn der zehnte Schalter S10, der elfte Schalter S11 und der zwölfte Schalter S12 geschlossen werden.

Ferner ist es denkbar, dass der zweite Schalter S2, der dritte Schalter S3, der vierte Schalter S4, der sechste Schalter S6, der siebte Schalter S7, der achte Schalter S8, der zehnte Schalter S10, der elfte Schalter S11 und der zwölfte Schalter S12 gleichzeitig geschlossen werden. Dadurch entstehen drei parallel verlaufende kurzschlussartige Strompfade von dem Neutralpol 36 zu dem Minuspol 35. Die Brennstoffzelleneinheit 12 liefert dabei einen Strom durch die entstandenen kurzschlussartigen Strompfade.

Zum Aufheizen des Antriebssystems 10 können beispielsweise auch der zweite Schalter S2, der siebte Schalter S7 und der achte Schalter S8 geschlossen werden. Dadurch entsteht ein kurzschlussartiger Strompfad von dem Neutralpol 36 über die erste Klemmdiode D1, den zweiten Schalter S2, die erste Wicklung 21, die zweite Wicklung 22, den siebten Schalter S7 und den achten Schalter S8 zu dem Minuspol 35. Die Impedanzen der ersten Wicklung 21 und der zweiten Wicklung 22 begrenzen in diesem Fall die Stromstärke des Stroms, den die Brennstoffzelleneinheit 12 durch den entstandenen kurzschlussartigen Strompfad liefert.

Ähnliche kurzschlussartige Strompfade entstehen, wenn beispielsweise anstelle des zweiten Schalters S2 der sechste Schalter S6 oder der zehnte Schalter S10 geschlossen werden, und wenn anstelle des siebten Schalters S7 und des achten Schalters S8 der elfte Schalter S11 und der zwölfte Schalter S12 oder dritte Schalter S3 und der vierte Schalter S4 geschlossen werden. Durch entsprechende Wahl der zu schließenden Schalter wird jeweils ein kurzschlussartiger Strompfad von dem Neutralpol 36 zu dem Minuspol 35 erzeugt, in welchem zwei der Wicklungen 21, 22, 23 der elektrischen Maschine 20 liegen. Wenn die Wicklungen 21, 22, 23 in einer Dreieckschaltung verschaltet sind, so liegt nur jeweils eine der Wicklungen 21, 22, 23 in dem kurzschlussartigen Strompfad.

Zum Aufheizen des Antriebssystems 10 kann beispielsweise auch der zweite Schalter S2 ständig geschlossen bleiben, und der siebte Schalter S7 und der achte Schalter S8 werden periodisch geschlossen und geöffnet. Dadurch entsteht periodisch ein kurzschlussartiger Strompfad von dem Neutralpol 36 über die erste Klemmdiode D1, den zweiten Schalter S2, die erste Wicklung 21, die zweite Wicklung 22, den siebten Schalter S7 und den achten Schalter S8 zu dem Minuspol 35, und der besagte Strompfad wird periodisch wieder aufgehoben.

Beim Aufheben des besagten kurzschlussartigen Strompfads entsteht in der ersten Wicklung 21 sowie in der zweiten Wicklung 22 eine Induktionsspannung. Besagte Induktionsspannung erzeugt einen Strom, der über die sechste Freilaufdiode X6 und die fünfte Freilaufdiode X5 zu der Sekundärbatterie 14 fließt. Durch besagten Strom wird die Sekundärbatterie 14 aufgeladen.

Anstelle des zweiten Schalters S2 können auch der sechste Schalter S6 oder der zehnte Schalter S10 geschlossen bleiben. Durch entsprechende Wahl der zu schließenden Schalter wird jeweils ein kurzschlussartiger Strompfad von dem Neutralpol 36 zu dem Minuspol 35 erzeugt, in welchem zwei der Wicklungen 21, 22, 23 der elektrischen Maschine 20 liegen.

Anstelle des siebten Schalters S7 und des achten Schalters S8 können beispielsweise der elfte Schalter S11 und der zwölfte Schalter S12 periodisch geschlossen und geöffnet werden. In diesem Fall fließt der durch die Induktionsspannung erzeugte Strom über die zehnte Freilaufdiode X10 und die neunte Freilaufdiode X9 zu der Sekundärbatterie 14.

Anstelle des siebten Schalters S7 und des achten Schalters S8 können auch beispielsweise der dritte Schalter S3 und der vierte Schalter S4 periodisch geschlossen und geöffnet werden. In diesem Fall fließt der durch die Induktionsspannung erzeugte Strom über die zweite Freilaufdiode X2 und die erste Freilaufdiode X1 zu der Sekundärbatterie 14.

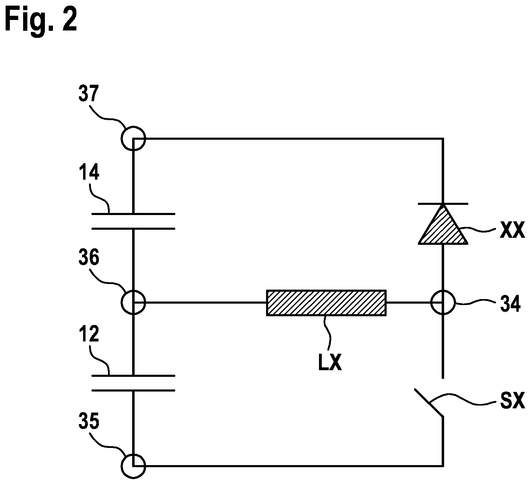

Eine vereinfachte Ersatzschaltung des Antriebssystems 10 aus Figur 1 zum Aufladen der Sekundärbatterie 14 ist in Figur 2 dargestellt. Dabei sind Schaltelemente, die für die Funktion des Aufladens der Sekundärbatterie 14 nicht wesentlich sind, nicht dargestellt. Durch entsprechende Ansteuerung wirkt das Antriebssystem 10 beim Aufladen der Sekundärbatterie 14 wie ein Hochsetzsteller oder ein Aufwärtswandler.

Die Brennstoffzelleneinheit 12 und die Sekundärbatterie 14 sind, wie in Figur 1 bereits gezeigt, seriell verschaltet. Das negative Terminal der Brennstoffzelleneinheit 12 ist mit dem Minuspol 35 verbunden, und das positive Terminal der Brennstoffzelleneinheit 12 ist mit dem Neutralpol 36 verbunden. Das negative Terminal der Sekundärbatterie 14 ist mit dem Neutralpol 36 verbunden, und das positive Terminal der Sekundärbatterie 14 ist mit dem Pluspol 37 verbunden.

Zwischen dem Neutralpol 36 und einem Ersatzphasenausgang 34 ist eine Ersatzinduktivität LX angeordnet. Die Ersatzinduktivität LX bildet dabei, je nach gewählten Schaltern, die Summe der Induktivitäten der ersten Wicklung 21 und der zweiten Wicklung 22, oder der zweiten Wicklung 22 und der dritten Wicklung 23, oder der dritten Wicklung 23 und der ersten Wicklung 21. Der Ersatzphasenausgang 34 entspricht, je nach gewählten Schaltern, dem ersten Phasenausgang 31, dem zweiten Phasenausgang 32 oder dem dritten Phasenausgang 33.

Zwischen dem Ersatzphasenausgang 34 und dem Minuspol 35 ist ein Ersatzschalter SX vorgesehen. Der Ersatzschalter SX bildet, je nach gewählten Schaltern, den siebten Schalter S7 und den achten Schalter S8, oder den elften Schalter S11 und den zwölften Schalter S12, oder den dritten Schalter S3 und den vierten Schalter S4 ab.

Zwischen dem Ersatzphasenausgang 34 und dem Pluspol 37 ist eine Ersatzfreilaufdiode XX vorgesehen. Die Ersatzfreilaufdiode XX bildet, je nach gewählten Schaltern, die sechste Freilaufdiode X6 und die fünfte Freilaufdiode X5, oder die zehnte Freilaufdiode X10 und die neunte Freilaufdiode X9, oder die zweite Freilaufdiode X2 und die erste Freilaufdiode X1 ab.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Aufheizen eines Antriebssystems (10), insbesondere für ein Fahrzeug, umfassend
eine Brennstoffzelleneinheit (12) zur Erzeugung elektrischer Energie, eine Sekundärbatterie (14) zur Speicherung elektrischer Energie, eine elektrische Maschine (20) mit Wicklungen (21, 22, 23) sowie einen Wechselrichter (30) zum Ansteuern der elektrischen Maschine (20), mit einem Wechselrichter (30), der als 3-Level-Inverter ausgebildet ist, der mit mehreren elektronischen Schaltern (S1, S2, S3, S4, S5, S6, S7, S8, S9, S10, S12) und Dioden (D1, D2, D3, D4, D5, D6, X1, X2, X3, X4, X5, X6, X7, X8, X9, X10, X12) sowie mit einem Pluspol (37), einem Minuspol (35) und einem Neutralpol (36) versehen wird, wobei die Brennstoffzelleneinheit (12) und die Sekundärbatterie (14) seriell verschaltet und mit den Polen (35, 36, 37) des Wechselrichters (30) verbunden werden,
wobei die Schalter (S1, S2, S3, S4, S5, S6, S7, S8, S9, S10, S12) des Wechselrichters (30) derart angesteuert werden, dass ein kurzschlussartiger Strompfad zwischen den Polen (35, 36, 37) des Wechselrichters (30) entsteht, mit denen die Brennstoffzelleneinheit (12) verbunden wird, **dadurch gekennzeichnet, dass** die Schalter (S1, S2, S3, S4, S5, S6, S7, S8, S9, S10, S12) des Wechselrichters (30) derart angesteuert werden, dass in dem kurzschlussartigen Strompfad mindestens eine Wicklung (21, 22, 23) der elektrischen Maschine (20) liegt und wobei die Schalter (S1, S2, S3, S4, S5, S6, S7, S8, S9, S10, S12) des Wechselrichters (30) derart angesteuert werden, dass der kurzschlussartige Strompfad periodisch entsteht und aufgehoben wird.

2. Verfahren zum Aufheizen eines Antriebssystems (10) nach Anspruch 1,
**dadurch gekennzeichnet, dass**
die Brennstoffzelleneinheit (12) und die Sekundärbatterie (14) derart mit den Polen (35, 36, 37) des Wechselrichters (30) verbunden werden, dass an dem Pluspol (37) ein höheres Potential anliegt als an dem Neutralpol (36), und dass an dem Minuspol (35) ein tieferes Potential anliegt als an dem Neutralpol (36).

3. Verfahren zum Aufheizen eines Antriebssystems (10) nach einem der vorstehenden Ansprüche, **dadurch gekennzeichnet, dass** parallel zu den Schaltern (S1, S2, S3, S4, S5, S6, S7, S8, S9, S10, S12) jeweils eine Freilaufdiode (X1, X2, X3, X4, X5, X6, X7, X8, X9, X10, X12) geschaltet werden, und dass
zwischen den Schaltern (S1, S2, S3, S4, S5, S6, S7, S8, S9, S10, S12) und dem Neutralpol (36) Klemmdioden (D1, D2, D3, D4, D5, D6) vorgesehen sind.

4. Verfahren nach einem der vorhergehenden Ansprüche, **dadurch gekennzeichnet, dass**
parallel zu jedem Schalter (S1, S2, S3, S4, S5, S6, S7, S8, S9, S10, S12) jeweils eine Freilaufdiode X1, X2, X3, X4, X5, X6, X7, X8, X9, X10, X12) derart geschaltet ist, dass
eine Induktionsspannung, die durch Aufheben des kurzschlussartigen Strompfads in der Wicklung (21, 22, 23) der elektrischen Maschine (20) entsteht,
einen Strom erzeugt, der über mindestens eine Freilaufdiode X1, X2, X3, X4, X5, X6, X7, X8, X9, X10, X12) zu der Sekundärbatterie (14) fließt.

5. Verwendung des Verfahrens nach einem der Ansprüche 1 bis 4 in einem Brennstoffzellenfahrzeug (FCV).

## Claims

1. Method for heating a drive system (10), in particular for a vehicle, comprising
a fuel cell unit (12) for generating electrical energy, a secondary battery (14) for storing electrical energy, an electric machine (20) comprising windings (21, 22, 23) and
an inverter (30) for actuating the electric machine (20), comprising an inverter (30) that is formed as a 3-level inverter and is provided with a plurality of electronic switches (S1, S2, S3, S4, S5, S6, S7, S8, S9, S10, S12) and diodes (D1, D2, D3, D4, D5, D6, X1, X2, X3, X4, X5, X6, X7, X8, X9, X10, X12) and with a positive pole (37), a negative pole (35) and a neutral pole (36), wherein the fuel cell unit (12) and the secondary battery (14) are interconnected in series and are connected to the poles (35, 36, 37) of the inverter (30), wherein the switches (S1, S2, S3, S4, S5, S6, S7, S8, S9, S10, S12) of the inverter (30) are actuated in such a way that a short-circuit-like current path is produced between the poles (35, 36, 37) of the inverter (30), to which poles the fuel cell unit (12) is connected, **characterized in that** the switches (S1, S2, S3, S4, S5, S6, S7, S8, S9, S10, S12) of the inverter (30) are actuated in such a way that at least one winding (21, 22, 23) of the electric machine (20) is located in the short-circuit-like current path, and wherein the switches (S1, S2, S3, S4, S5, S6, S7, S8, S9, S10, S12) of the inverter (30) are actuated in such a way that the short-circuit-like current path is produced and suppressed periodically.

2. Method for heating a drive system (10) according to Claim 1, **characterized in that**
the fuel cell unit (12) and the secondary battery (14) are connected to the poles (35, 36, 37) of the inverter (30) in such a way that a higher potential is applied to the positive pole (37) than to the neutral pole (36), and that a lower potential is applied to the negative pole (35) than to the neutral pole (36).

3. Method for heating a drive system (10) according to either of the preceding claims, **characterized in that** a respective freewheeling diode (X1, X2, X3, X4, X5, X6, X7, X8, X9, X10, X12) is connected in parallel with the switches (S1, S2, S3, S4, S5, S6, S7, S8, S9, S10, S12), and **in that**
clamping diodes (D1, D2, D3, D4, D5, D6) are provided between the switches (S1, S2, S3, S4, S5, S6, S7, S8, S9, S10, S12) and the neutral pole (36).

4. Method according to one of the preceding claims, **characterized in that**
a respective freewheeling diode (X1, X2, X3, X4, X5, X6, X7, X8, X9, X10, X12) is connected in parallel with each switch (S1, S2, S3, S4, S5, S6, S7, S8, S9, S10, S12) in such a way that
an induction voltage, which is produced through suppressing the short-circuit-like current path in the winding (21, 22, 23) of the electric machine (20),
generates a current, which flows to the secondary battery (14) via at least one freewheeling diode (X1, X2, X3, X4, X5, X6, X7, X8, X9, X10, X12).

5. Use of the method according to one of Claims 1 to 4 in a fuel cell vehicle (FCV).

## Revendications

1. Procédé de chauffage d'un système d'entraînement (10), destiné en particulier à un véhicule, ledit système d'entraînement comprenant
une unité formant pile à combustible (12) destinée à générer de l'énergie électrique,
une batterie secondaire (14) destinée à stocker de l'énergie électrique,
une machine électrique (20) comprenant des enroulements (21, 22, 23) et
un onduleur (30) destiné à entraîner la machine électrique (20), l'onduleur (30) étant formé comme un inverseur à 3 niveaux qui est pourvu de plusieurs commutateurs électroniques (S1, S2, S3, S4, S5, S6, S7, S8, S9, S10, S12) et diodes (D1, D2, D3, D4, D5, D6, X1, X2, X3, X4, X5, X6, X7, X8, X9, X10, X12) et d'un pôle plus (37), d'un pôle moins (35) et d'un pôle neutre (36), l'unité formant pile à combustible (12) et la batterie secondaire (14) étant montées en série et étant reliées aux pôles (35, 36, 37) de l'onduleur (30),
les commutateurs (S1, S2, S3, S4, S5, S6, S7, S8, S9, S10, S12) de l'onduleur (30) étant commandés de manière à créer un chemin de courant de type court-circuit entre les pôles (35, 36, 37) de l'onduleur (30) auxquels l'unité formant pile à combustible (12) est reliée, **caractérisé en ce que** les commutateurs (S1, S2, S3, S4, S5, S6, S7, S8, S9, S10, S12) de l'onduleur (30) sont commandés de manière qu'au moins un enroulement (21, 22, 23) de la machine électrique (20) soit situé dans le chemin de courant de type court-circuit et les commutateurs (S1, S2, S3, S4, S5, S6, S7, S8, S9, S10, S12) de l'onduleur (30) étant commandés de manière que le chemin de courant de type court-circuit apparaisse et soit supprimé périodiquement.

2. Procédé de chauffage d'un système d'entraînement (10) selon la revendication 1, **caractérisé en ce que** l'unité formant pile à combustible (12) et la batterie secondaire (14) sont reliées aux pôles (35, 36, 37) de l'onduleur (30) de manière à appliquer au pôle plus (37) un potentiel plus élevé qu'au pôle neutre (36), et à appliquer au pôle moins (35) un potentiel plus faible qu'au pôle neutre (36).

3. Procédé de chauffage d'un système d'entraînement (10) selon l'une des revendications précédentes, **caractérisé en ce qu'**une diode de roue libre (X1, X2, X3, X4, X5, X6, X7, X8, X9, X10, X12) est montée en parallèle avec chacun des commutateurs (S1, S2, S3, S4, S5, S6, S7, S8, S9, S10, S12) et **en ce que** des diodes de blocage (D1, D2, D3, D4, D5, D6) sont prévues entre les commutateurs (S1, S2, S3, S4, S5, S6, S7, S8, S9, S10, S12) et le pôle neutre (36).

4. Procédé selon l'une des revendications précédentes, **caractérisé en ce qu'**une diode de roue libre (X1, X2, X3, X4, X5, X6, X7, X8, X9, X10, X12) est montée en parallèle avec chaque commutateur (S1, S2, S3, S4, S5, S6, S7, S8, S9, S10, S12) de manière qu'une tension d'induction, qui est créée par la suppression du chemin de courant de type court-circuit dans l'enroulement (21, 22, 23) de la machine électrique (20), génère un courant qui circule vers la batterie secondaire (14) par le biais d'au moins une diode de roue libre (X1, X2, X3, X4, X5, X6, X7, X8, X9, X10, X12).

5. Utilisation du procédé selon l'une des revendications 1 à 4 dans un véhicule à pile à combustible (FCV).
